# EUROPÄISCHE PATENTANMELDUNG

(11) **EP 2 388 214 A1**
(43) Veröffentlichungstag der Anmeldung: **23.11.2011**
(21) Anmeldenummer: 11165714.4
(22) Anmeldetag: 11.05.2011
(51) Int. Cl.: B65G 21/10, B65G 21/22

(54) **Führungseinrichtung für das Fördermittel einer Förderanlage der tabakverarbeitenden Industrie**

(30) Priorität: 19.05.2010 DE 102010029126
(71) Anmelder: HAUNI Maschinenbau AG, 21033 Hamburg (DE)
(72) Erfinder: Müller, Thomas, 20259 Hamburg (DE); Wentzel, Fabian, 20535, Hamburg (DE); Horn, Matthias, 22926, Ahrensburg (DE)
(74) Vertreter: Grebner, Christian Georg Rudolf

(57) **Zusammenfassung**

Die Erfindung betrifft eine Führungseinrichtung (10) für ein Fördermittel, insbesondere Förderkette, einer Förderanlage der Tabak verarbeitenden Industrie. Bei der Führungseinrichtung (10) ist das Fördermittel seitlich an seinen Längsseiten zwischen zwei Führungsschienen (12,14) in Förderrichtung angeordnet oder führbar, wobei wenigstens eine seitliche Führungsschiene (12,14) in einem Abschnitt mehrere nicht-elastische Führungskörper (22) und wenigstens einen elastischen Abstandskörper (24) aufweist, wobei der wenigstens eine elastische Abstandskörper (24) in Förderrichtung des Fördermittels zwischen zwei nicht-elastischen Führungskörpern (22) angeordnet oder anordbar ist und wobei die Anordnung aus zwei nicht-elastischen Führungskörpern (22) mit einem dazwischen angeordneten oder anordbaren elastischen Abstandskörpern (24) von wenigstens einem Spannelement durchsetzt oder durchsetzbar ist, so dass die Anordnung aus den nicht-elastischen Führungskörpern (22) und elastischen Abstandskörpern (24) verspannt ist oder verspannbar ist.
Ferner betrifft die Erfindung eine Förderanlage der Tabak verarbeitenden Industrie mit einem Fördermittel, vorzugsweise einer Tragförderkette, für die Förderung eines Artikelmassenstroms aus stabförmigen Artikeln der Tabak verarbeitenden Industrie.

## Beschreibung

Die Erfindung betrifft eine Führungseinrichtung für ein Fördermittel, insbesondere Förderkette, einer Förderanlage der Tabak verarbeitenden Industrie. Ferner betrifft die Erfindung eine Förderanlage der Tabak verarbeitenden Industrie mit einem Fördermittel, vorzugsweise einer Tragförderkette, für die Förderung eines Artikelmassenstroms aus stabförmigen Artikeln der Tabak verarbeitenden Industrie.

In DE 10 2007 022 235 A1 ist eine Einrichtung zum Transport von stabförmigen Artikeln der Tabak verarbeitenden Industrie in einem Massenstrom zwischen Maschinen der Tabak verarbeitenden Industrie entlang einem Förderweg zwischen einem Ausgang einer Herstellungsmaschine zu einem Eingang einer Packmaschine offenbart, wobei entlang des Förderwegs eine verstellbare Verzweigungseinrichtung vorgesehen ist, so dass in Abhängigkeit der Stellung der Verzweigungseinrichtung wahlweise ein Massenstrom zum Eingang der zweiten Maschine oder zum Eingang einer anderen Vorrichtung der Tabak verarbeitenden Industrie gefördert wird.

Weiterhin ist aus DE 37 42 093 A1 eine Einrichtung zur Überführung von Produkten der Tabak verarbeitenden Industrie bzw. von Zigarettenpackungen zwischen Maschinen einer Produktionsstraße bekannt.

Außerdem ist in DE 197 23 689 A1 eine Einrichtung zum Herstellen und Verpacken von Zigaretten beschrieben, wobei die Einrichtung einen zwischen einer Fertigungsstation und einer Verpackungsstation angeordneten Zigarettenförderer aufweist. Ferner ist in DE 20 2004 020 828 A1 eine Förderanordnung von Zigaretten offenbart.

Ausgehend von diesem Stand der Technik besteht die Aufgabe der vorliegenden Erfindung darin, die bei einer an einer Förderanlage der Tabak verarbeitenden Industrie bestehenden Anschlusspositionen, die für einen Massenstrom mit stabförmigen Artikeln überbrückt werden sollen, auf einfache und flexible Weise miteinander zu verbinden, insbesondere bei Anschlusspositionen, welche nicht fluchtend in verschiedenen Ebenen liegen.

Gelöst wird diese Aufgabe durch eine Führungseinrichtung für ein Fördermittel, insbesondere Förderkette, einer Förderanlage der Tabak verarbeitenden Industrie, wobei das Fördermittel seitlich an seinen Längsseiten zwischen zwei Führungsschienen in Förderrichtung angeordnet oder führbar ist, wobei wenigstens eine seitliche Führungsschiene in einem Abschnitt mehrere nicht-elastische Führungskörper und wenigstens einen elastischen Abstandskörper aufweist, wobei der wenigstens eine elastische Abstandskörper in Förderrichtung des Fördermittels zwischen zwei nicht-elastischen Führungskörpern angeordnet oder anordbar ist und wobei die Anordnung aus zwei nicht-elastischen Führungskörpern mit einem dazwischen angeordneten oder anordbaren elastischen Abstandskörper von wenigstens einem Spannelement durchsetzt oder durchsetzbar ist, so dass die Anordnung aus den nicht-elastischen Führungskörpern und den elastischen Abstandskörpern verspannt ist oder verspannbar ist.

Die Erfindung beruht auf dem Gedanken, dass bei einer Förderanlage der Tabak verarbeitenden Industrie mit einem Transportmittel, insbesondere mit einer Förderkette, zwischen zwei beabstandeten Bestandteilen der Förderanlage, in denen die Förderkette zusammen mit dem darauf angeordneten Massenstrom an stabförmigen Artikeln gefördert wird, unter Verwendung der Führungseinrichtung diese beiden beabstandeten und gegebenenfalls versetzt zueinander angeordneten Teile der Förderanlage miteinander zu verbinden. Hierbei können aufgrund der räumlichen Gegebenheiten die Anschlusspositionen der zu verbindenden Anschlusspositionen der Förderanlagenbestandteile versetzt zueinander angeordnet werden, so dass durch die Führungseinrichtung aufgrund ihrer Krümmbarkeit bzw. Verspannbarkeit die Anschlusspositionen miteinander verbunden werden und somit ein seitlicher und/oder vertikaler Versatz der Anschlüsse der Anschlusspositionen ausgeglichen bzw. durch die Führungseinrichtung überbrückt wird, wobei durch die Führungseinrichtung ermöglicht ist, die Förderkette als Transportmittel für die stabförmigen Artikel zwischen den Anschlusspositionen zu führen. Hierbei folgt die Förderkette als Transportmittel der angepassten gekrümmten sowie gebogenen Struktur der Führungsschienen, die als polygonale Förderstrecke oder Förderabschnitt bzw. als (quasi) polygonaler Kurvenabschnitt oder Kurvenförderabschnitt ausgebildet ist.

Durch ein Verstellen bzw. Verspannen der Spannelemente ist es möglich, aufgrund der zwischen den starren, das heißt nicht-elastischen Führungskörpern angeordneten elastischen Abstandskörpern, diese entsprechend zu pressen und eine mehrteilige Führungsschiene auszubilden, so dass durch Spannen der Spannelemente bzw. von Zugstreben benachbarte Führungskörper in Förderrichtung in einem stumpfen Winkel zueinander angeordnet sind, wodurch in Förderrichtung des Transportmittels der Übergang zwischen zwei Führungskörpern einer Führungsschiene diskontinuierlich ausgebildet ist. Dadurch ist ein (quasi) polygonaler Kurvenförderabschnitt oder Kurvenabschnitt als Führungseinrichtung vorgesehen.

Daher ist insbesondere zwischen zwei in Laufrichtung der Förderkette nicht gebogenen, das heißt geraden, Führungskörpern ein elastischer Abstandskörper angeordnet, wodurch die Führungskörper in der vertikalen Ebene und in der horizontalen Ebene zueinander als (quasi) polygonaler Förderabschnitt angeordnet werden können.

Da die baugleichen Führungskörper jeweils eine gerade Führungsfläche für das Transportmittel aufweisen, kann unter Verwendung von mehreren nicht-elastischen Führungskörpern eine gekrümmte Struktur der gesamten Führungseinrichtung erreicht werden. Hierzu werden insbesondere die Führungskörper und die Abstandskörper durchsetzende Zugelemente oder Spannelemente entsprechend gespannt und/oder eingestellt, wobei vorzugsweise die Spannelemente bzw. Zugelemente an den Enden der Führungseinrichtung gespannt werden.

Als Spannelemente bzw. Zugelemente sind hierfür, insbesondere biegbare, Stangen mit Gewindeenden bzw. mit Innengewinden oder Außengewinden oder Gewindestangen oder Zugseile vorgesehen, wobei die Zugseile aus Rundmaterial und/oder Flachmaterial aus Metall oder Kunststoff ausgebildet sein können.

Darüber hinaus ist in einer Ausgestaltung außerdem vorgesehen, dass für die beiden Seiten des Fördermittels bzw. der Förderkette, insbesondere Tragförderkette, jeweils eine seitliche Führungsschiene in einem Förderabschnitt jeweils aus mehreren nicht-elastischen Führungskörpern und zwischen jeweils zwei nicht-elastischen Führungskörpern angeordneten oder anordbaren elastischen Abstandskörpern vorgesehen sind. Dadurch, dass ein Fördermittel bzw. ein Transportmittel an seinen Längsseiten mittels jeweils einer Führungsschiene sicher von einer Anschlussposition eines Förderanlagenteils zur Anschlussposition an einem zweiten Bestandteil einer Förderanlage seitlich geführt wird, ist es unter Verwendung der mehrteiligen Führungsschienen möglich, aufgrund des modularen Aufbaus auf einfache Weise den Abstand zwischen den zu überbrückenden Anschlusspunkten der Förderanlage unter Ausbildung einer gegebenenfalls räumlich in einer oder in zwei Ebenen gekrümmten polygonalen Struktur die beiden beabstandeten und miteinander zu verbindenden Anschlusspunkte zu überbrücken bzw. zu verbinden.

Dabei kann es in einer bevorzugten Ausgestaltung vorgesehen sein, dass die seitlichen Führungsschienen jeweils von wenigstens einem, insbesondere von mehreren, vorzugsweise zwei, Spannelementen durchsetzbar oder durchsetzt und spannbar sind, wobei die Spannelemente in Längserstreckung der Führungsschienen angeordnet sind. Hierdurch wird eine Anpassung an die zu überbrückende Strecke zwischen zwei versetzten Anschlusspunkten erreicht. Dadurch, dass sowohl eine variable Einstellung zu einer vertikalen Anpassung der Anschlusspunkte als auch eine horizontale Winkelanpassung zur horizontalen Anpassung und damit auch ein Spurversatz überbrückbar ist, wird eine universelle bzw. variable Einsatzmöglichkeit der Führungseinrichtung erreicht. Dadurch, dass an jeder Führungsschiene alternierend nicht-elastische baugleiche Führungskörper und elastische Abstandskörper in Förderrichtung eines Transportmittels angeordnet sind, kann nahezu jede geforderte Länge der Führungseinrichtung durch eine vorbestimmte Anzahl von Führungskörpern und Abstandkörpern auf einfache Weise gebildet bzw. eingestellt werden.

Darüber hinaus ist es von Vorteil, wenn die nicht-elastischen Führungskörper dicker als die elastischen Abstandskörper sind, wodurch eine formstabile verspannte Anordnung der Führungskörper und der Abstandskörper erreicht wird.

Gemäß einer weiteren bevorzugten Ausführungsform der Führungseinrichtung ist vorgesehen, dass die beiden beabstandeten zusammenwirkenden Führungsschienen in Förderrichtung des Fördermittels zwischen zwei Anschlussplatten bzw. Abschlussplatten angeordnet bzw. begrenzt sind, wobei insbesondere die Anschlussplatten und/oder die nicht-elastischen Führungskörper und die elastischen Abstandskörper von den Spannelementen bzw. von den Zugstreben oder dergleichen durchsetzt oder durchsetzbar sind. Hierbei befinden sich die Spannelemente bzw. Spannstreben an wenigstens einer Seite der Führungseinrichtung im Eingriff mit einer Schraube oder eines Schraubbolzens bzw. einer Schraubmutter, so dass durch Verdrehen der Spannschrauben oder Spannbolzen die nicht-elastischen Führungskörper und die dazwischen angeordneten Abstandskörper miteinander verspannt werden oder unter Ausbildung einer vorbestimmten Kraft verpresst sind.

Insbesondere bei der Verwendung von zwei oder mehreren Spannelementen pro Führungsschiene ist es möglich, dass die verspannten Führungsschienen eine vorbestimmbare, formstabile Krümmung aufweisen, womit Anschlusspositionen in verschiedenen Ebenen verbindbar und überbrückbar sind.

Im Zusammenwirken mit den zwei funktionskomplementären Führungsschienen wird eine zweischienige Führungseinrichtung für das Fördermittel, vorzugsweise Tragförderkette, erreicht.

Bei einer vorteilhaften Ausgestaltung der Führungseinrichtung ist weiter vorgesehen, dass die Abschlussplatten jeweils einen Ausschnitt zum Durchtritt des Leertrums des Fördermittels und/oder jeweils einen Ausschnitt zum Durchtritt des Volltrums des Fördermittels aufweisen.

Außerdem ist es gemäß einer Ausführungsform bevorzugt, wenn in Förderrichtung des Fördermittels mehrere Führungskörper einer Führungsschiene unter Verwendung von beispielsweise als Längsstreben ausgebildeten Verbindungselementen, insbesondere einer oder mehrerer Laschen, Klammern oder dergleichen, verbindbar oder verbunden sind. Hierdurch wird die Stabilität und Festigkeit einer räumlich gekrümmten Führungseinrichtung erreicht.

Des Weiteren ist es in einer Ausgestaltung von Vorteil, dass quer zur Förderrichtung des Fördermittels wenigstens eine Verstrebung bzw. eine Verbindungsstrebe oder Querstrebe zwischen den voneinander beabstandeten Führungsschienen angeordnet ist, wobei unter Verwendung der Verstrebung bzw. der Verbindungsstrebe zwei Führungskörper von jeweils einer Führungsschiene miteinander verbindbar sind. Ferner ist es möglich, unter Verwendung der anpassbaren Verbindungsstrebe oder Querstrebe auch den Abstand zwischen zwei Führungsschienen auf einfache Weise einzustellen bzw. zu variieren, um die Führungseinrichtung auf verschieden breite Förderketten, insbesondere Tragförderketten oder Mattenketten, anzupassen.

Eine sichere seitliche Führung des Transportmittels in der Führungseinrichtung ergibt sich, wenn die Führungskörper der Führungsschienen jeweils mindestens eine, vorzugsweise U-förmige oder nutförmige, Aufnahme zur Führung des Volltrums des Fördermittels aufweisen. Die beabstandeten, jeweils verspannten Führungsschienen weisen vorteilhafterweise eine U-förmige Aufnahme auf, die einander zugewandt sind und in denen die Förderkette seitlich geführt wird.

Als ein Volltrum wird ein Abschnitt des, vorzugsweise schleifenförmigen, Fördermittels, insbesondere der Förderkette, verstanden, auf dem die zu fördernden, stabförmigen Artikel aufgenommen bzw. abgelegt sind. Als Leertrum wird ein Abschnitt des Fördermittels verstanden, der als produktfreier Rückführbereich des leeren Fördermittelabschnitts ausgebildet ist.

Insbesondere ist gemäß einer Weiterbildung der Führungseinrichtung vorgesehen, dass die Führungskörper der Führungsschienen jeweils mindestens eine, vorzugsweise U-förmige oder nutförmige, Aufnahme zur Führung des Leertrums des Fördermittels aufweisen. Vorzugsweise sind die Aufnahmen für das Volltrum und/oder die Aufnahmen für das Leertrum als Führungsprofile an den Führungskörpern ausgebildet.

Darüber hinaus zeichnet sich eine Ausführungsform der Führungseinrichtung dadurch aus, dass die Führungsschienen durch Spannen der Spannelemente in eine nicht-gerade, insbesondere gebogene oder gekrümmte, bzw. polygonal ausgerichtete Form bringbar sind, um eine Führungsstruktur für das Fördermittel auszubilden.

Die Führungseinrichtung ist erfindungsgemäß als Zwischenstück oder als Adapter zwischen geradlinigen Förderabschnitten, insbesondere einer Förderanlage der Tabak verarbeitenden Industrie ausgebildet. Insbesondere ist dabei die Führungseinrichtung zwischen zwei Anschlusspositionen, die an einer Förderanlage voneinander beabstandet sind, angeordnet, wobei unter Verwendung von mehreren nicht-elastischen baugleichen Führungskörpern und elastischen Abstandselementen bzw. Abstandskörpern ein vertikaler und/oder horizontaler Versatz zwischen den Anschlusspositionen überbrückt wird, so dass die Förderkette bzw. das Transportmittel zwischen den Anschlusspositionen unter Verwendung der erfindungsgemäßen Führungseinrichtung sicher geführt wird. Dadurch werden beispielsweise auf einfache Weise zwei beabstandete Fördermodule und/oder Speichersysteme einer Förderanlage und/oder Herstellungsmaschinen und/oder Verpackungsmaschinen miteinander verbunden, wodurch ein Massenstrom sicher von einem ersten Fördermodul zu einem zweiten Fördermodul auf einer Förderkette gefördert wird, wobei die Förderkette im zu überbrückenden Bereich zwischen den Fördermodulen in der Führungseinrichtung für die Förderkette geführt ist oder wird.

Darüber hinaus ist es aufgrund des modularen Aufbaus der Führungsschienen ebenfalls möglich, verschiedene Längen bzw. den Abstand zwischen zwei Anschlusspositionen zu realisieren bzw. zu überbrücken, wobei die Führungseinrichtung als ein individuell anpassbarer sowie längenvariabler Adapter ausgebildet ist. Hierbei können die baugleichen Führungskörper, die beispielsweise aus einem Metall oder harten Kunststoff gefertigt sind und die Abstandskörper nach Art eines Bausatzes für eine oder für beide Führungsschienen zusammengesetzt werden.

Darüber hinaus wird die Aufgabe gelöst durch eine Förderanlage der Tabak verarbeitenden Industrie mit einem Fördermittel, vorzugsweise einer Tragförderkette, für einen Artikelmassenstrom aus bzw. mit stabförmigen Artikeln der Tabak verarbeitenden Industrie, wobei die stabförmigen Artikel, vorzugsweise queraxial, mittels des Fördermittels förderbar sind, und mit einer Führungseinrichtung für das Fördermittel, wie voranstehend beschrieben. Zur Vermeidung von Wiederholungen wird auf die obigen Ausführungen ausdrücklich verwiesen.

Durch die Verwendung der Führungseinrichtung für ein Fördermittel in einer Förderanlage wird erreicht, dass die Anschlusspunkte für die Förderkette zwischen zwei Modulen einer Förderanlage auf einfache Weise miteinander verbunden werden, wobei diese Module beispielsweise als Schragenfüller, Schragenentleerer oder FiFo-Speicher ausgebildet sind. Gleichermaßen ist die erfindungsgemäße Führungseinrichtung geeignet für den Anschluss an Filter- oder Zigarettenherstellungsmaschinen als auch für den Anschluss an einen Füllkopf einer Packmaschine.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1a: schematisch eine perspektivische Ansicht einer erfindungsgemäßen Führungseinrichtung für eine Förderkette einer Förderanlage der Tabak verarbeitenden Industrie;
- Fig. 1b: schematisch einen Längsschnitt durch die Führungseinrichtung;
- Fig. 2: schematisch eine perspektivische Ansicht einer weiteren Ausführungsform einer Führungseinrichtung für eine Förderkette;
- Fig. 3a, 3b: schematisch eine perspektivische Ansicht bzw. eine Draufsicht auf eine gekrümmte Führungseinrichtung;
- Fig. 4a, 4b, 4c: jeweils schematische perspektivische Ansichten einer Führungseinrichtung und jeweils eine Seitenansicht der jeweils perspektivisch dargestellten Führungseinrichtungen.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

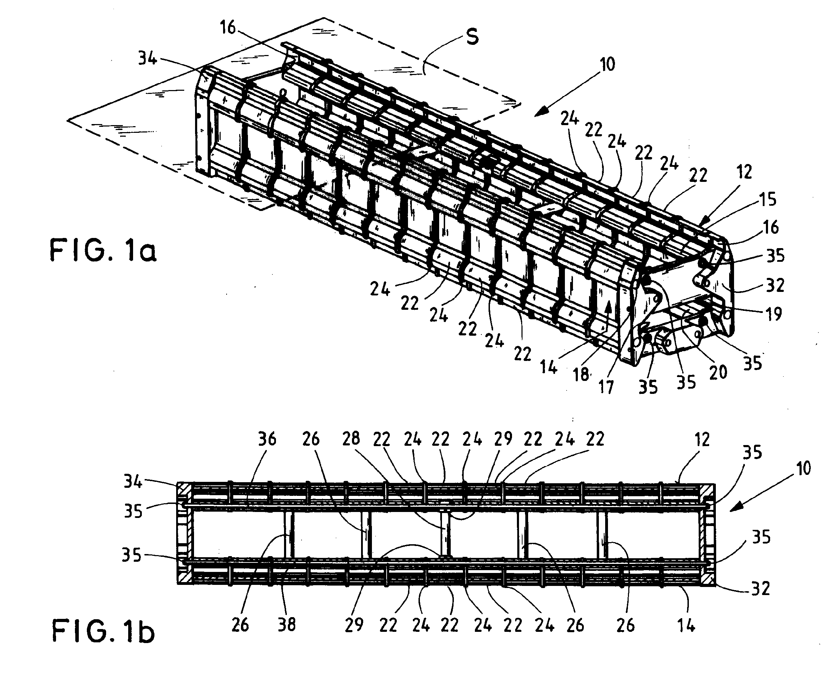

In Fig. 1a ist eine perspektivische Darstellung einer Führungseinrichtung 10 für eine Förderkette einer Förderanlage der Tabak verarbeitenden Industrie dargestellt. Die Führungseinrichtung 10 verfügt über zwei Führungsschienen 12, 14, die bei der in Fig. 1a sowie 1b dargestellten geradlinigen Ausführungsform parallel zueinander angeordnet sind. Zwischen den Führungsschienen 12, 14 wird im oberen Bereich zwischen den U-förmigen Führungsprofilen 16, 18 für den als das Volltrum ausgebildeten Förderkettenabschnitt mit darauf angeordneten stabförmigen Artikeln, z.B. Zigaretten, seitlich die Förderkette der Förderanlage hindurchgeführt. Hierbei sind die Profilschienen 12, 14 im oberen Bereich entlang der Förderrichtung der Förderkette mit einer nutförmigen Aufnahme ausgebildet. Die profilförmigen Nuten bzw. U-förmigen Führungsprofile 16, 18 der Führungsschienen 12, 14 für das Volltrum sind einander zugewandt, wodurch eine stabile Führung einer Förderkette erreicht wird.

Jede der Führungsschienen 12, 14 besteht aus mehreren hintereinander angeordneten, nicht-elastischen Führungskörpern 22, z.B. aus Aluminium oder einem anderen Leichtmetall oder aus einem festen bzw. harten Kunststoff, und zwischen den Führungskörpern 22 jeweils angeordneten elastischen Abstandskörpern 24. Hierbei sind die Führungskörper 22 und die elastischen Abstandskörper 24 alternierend entlang der Förderrichtung bzw. dem Verlauf der Förderkette angeordnet. Vorzugsweise sind die elastischen Abstandskörper 24 aus einem elastischen Kunststoff oder Gummi hergestellt. Hierbei ist die Dicke bzw. Breite der Abstandskörper 24 kleiner als die Breite der nicht-elastischen Führungskörper 22.

Die Führungsschienen 12, 14 sind aus mehreren, baugleichen Führungskörpern 22 und Abstandskörpern 24 gebildet, wobei die Führungsschienen 12, 14 bei einer geradlinigen Anordnung, wie sie beispielsweise im Längsschnitt in Fig. 1b dargestellt ist, symmetrisch bzw. spiegelsymmetrisch zueinander angeordnet sind. Endseitig an den Führungsschienen 12, 14 sind Abschlussplatten 32, 34 angeordnet.

Die in Fig. 1a eingezeichnete frontseitige Abschlussplatte 32 verfügt über eine oberseitige, nach oben offene Transporttrumausnehmung 15, durch die hindurch der Abschnitt der, vorzugsweise schleifenförmigen, Förderkette mit darauf angeordneten bzw. aufgenommenen stabförmigen Artikeln als Volltrum gefördert wird. Ferner ist die Abschlussplatte 32 mit einer unterhalb der Transporttrumausnehmung 15 ausgebildeten, vorzugsweise geschlossenen, Leertrumausnehmung 20 versehen, so dass der als Leertrum ausgebildete Abschnitt der Förderkette, im artikelfreien bzw. produktfreien Rückführbereich durch die Leertrumausnehmung 20 hindurch gefördert wird. Auch die Abschlussplatte 34 ist mit einer Transporttrumausnehmung und einer Leertrumausnehmung ausgebildet.

Im unteren Bereich der Führungsschienen 12, 14 auf Höhe der Leertrumausnehmung 20 verfügen Führungskörper 22 jeweils über, insbesondere nutförmige, Führungsprofile 17, 19 für das rückgeführte Leertrum der Förderkette, so dass der produktfreie Förderkettenabschnitt als Leertrum der Förderkette lateral sicher bei der Rückführung entlang der Führungseinrichtung 10 zwischen den Führungskörpern 22 der Führungsschienen 12, 14 unterhalb des oberseitigen geführten Volltrums geführt ist bzw. wird.

In Fig. 1b ist schematisch ein Längsschnitt durch den oberen Bereich der Führungsschienen 12, 14 gemäß der in Fig. 1a schematisch eingezeichneten Schnittebene S in einer Draufsicht dargestellt. Die Führungskörper 22 und die Abstandskörper 24 weisen Durchbrechungen oder Löcher oder Bohrungen oder dergleichen auf, so dass die Führungskörper 22 und die Abstandskörper 24 von einer Zugstrebe 36, 38 durchsetzt sind, wobei im Bereich der Abschlussplatten 32, 34 an der Außenseite der als Außenplatten ausgebildeten Abschlussplatten 32, 34 Schraubmuttern 35 auf den als Spannelementen ausgebildeten Zugstreben 36, 38 angeordnet sind.

Jede Führungsschiene 12, 14 im dargestellten Ausführungsbeispiel verfügt über jeweils zwei Zugstreben 36, 38, so dass durch Anziehen der Schraubmuttern 35 an den Enden der Zugstreben 36, 38 eine vorbestimmte räumliche Führungsform der Führungseinrichtung 10 erreicht wird, wobei die Führungskörper 22 und die Abstandskörper 24 miteinander verspannt sind oder werden. Es ist im Rahmen der Erfindung ebenfalls möglich, in einer Abwandlung pro Seite bzw. pro Führungsschiene jeweils eine Zugstrebe oder mehr als zwei Zugstreben als Spannelemente vorzusehen.

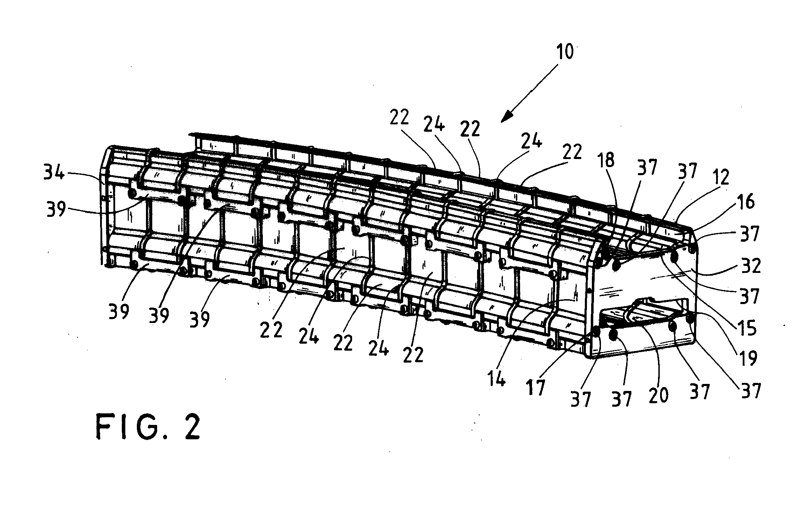

Fig. 2 zeigt schematisch eine perspektivische Ansicht einer räumlich gekrümmten Führungseinrichtung 10, wobei an der Außenseite der Führungsschiene 14 Fixierungslaschen 39 im oberen Bereich und unteren Bereich paarweise angeordnet sind, wobei die Fixierungslaschen 39 jeweils zwei Abstandskörper 24 und einen Führungskörper 22 seitlich übergreifen. Darüber hinaus sind an einer Abschlussplatte 32 im oberen Bereich und unteren Bereich der Führungsschienen 12, 14 jeweils zwei Spannschrauben 37 angeordnet, die die Führungsschienen 12 bzw. 14 durchsetzenden (hier nicht dargestellten) Verbindungsstreben bzw. Zugstreben einseitig begrenzen. Durch die Einstellung der Spannschrauben 37 und/oder durch die Fixierung der Fixierungslaschen 39 ist es möglich, eine räumlich gekrümmte, polygonale Führungseinrichtung 10 auszubilden.

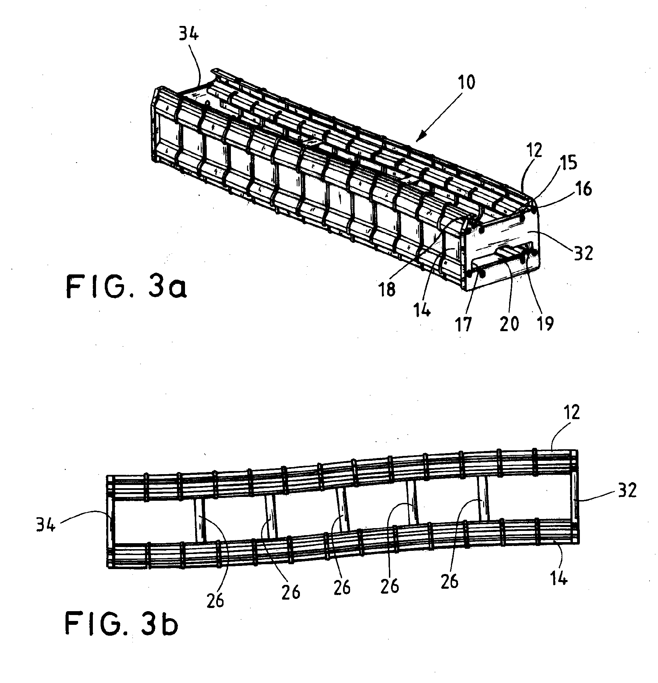

In Fig. 3a ist eine perspektivische Darstellung einer räumlich gekrümmten Führungseinrichtung 10 perspektivisch dargestellt. In Fig. 3b ist eine entsprechende Draufsicht auf die Führungseinrichtung 10 dargestellt. Wie aus der Draufsicht in Fig. 3b hervorgeht, sind die Führungskörper 22 und Abstandskörper 24 der Führungsschienen 12, 14 aufgrund der Fixierung der Verbindungsstreben und/oder der Fixierungslaschen 39 so hintereinander angeordnet und verspannt, dass die Führungsschienen 12, 14 in der horizontalen Ebene einen seitlichen Versatz zwischen den Anschlussplatten 32, 34 aufweisen.

Wie aus den Fig. 1b, 3b hervorgeht, sind die Führungsschienen 12, 14 bzw. Führungskörper 22 der Führungsschienen 12, 14 durch Querstreben 26 miteinander verbunden.

Darüber hinaus ist in Fig. 1b zwischen den Führungsschienen 12, 14 eine Klemmstrebe 28 mit Klemmen 29 angeordnet, wobei die Klemmen 29 im mittleren Segment bzw. an den mittleren Führungskörper 22 der Führungsschienen 12, 14 an den Zugstreben 36, 38 angreifen. Durch individuelles Spannen bzw. Verdrehen der Schraubmuttern 35 an den beiden Abschlussplatten 32, 34 ist eine unabhängige Ausrichtung der Führungsschienen 12, 14 möglich. Ferner sind die Schraubmuttern 35 an den Abschlussplatten 32, 34 in von oben nach unten frei zugänglichen Versenkungen angeordnet, um einen abstandsfreien Anschluss von weiteren Führungseinrichtungen 10 und/oder einen abstandsfreien Anschluss an ein angrenzendes Fördermodul oder an eine Fördereinrichtung auszubilden.

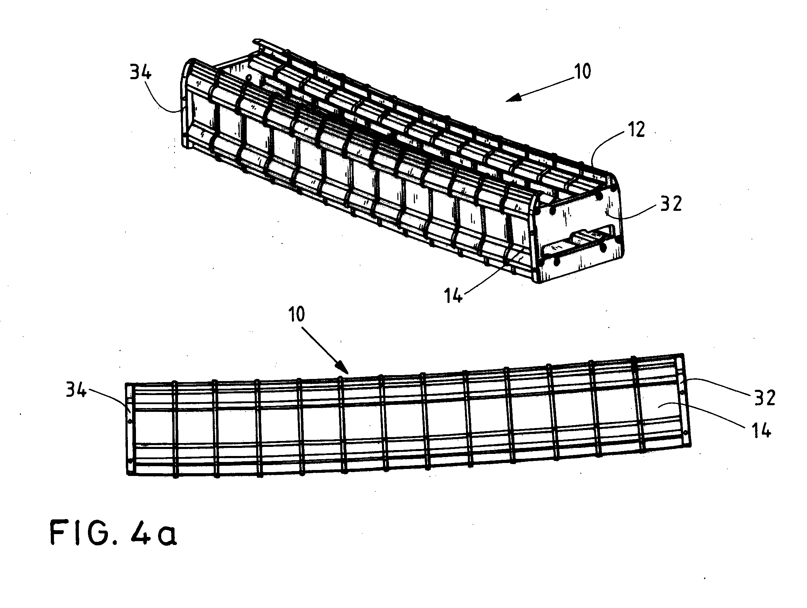

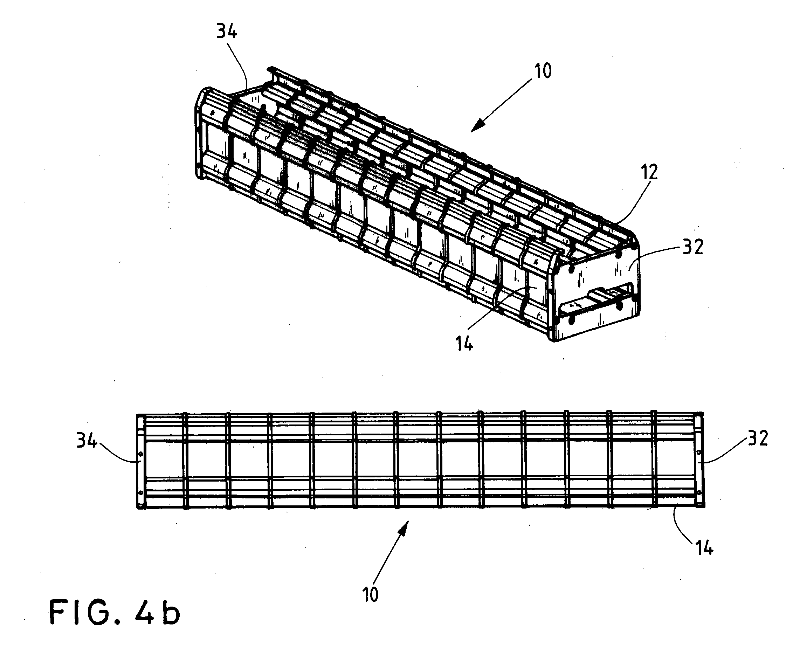

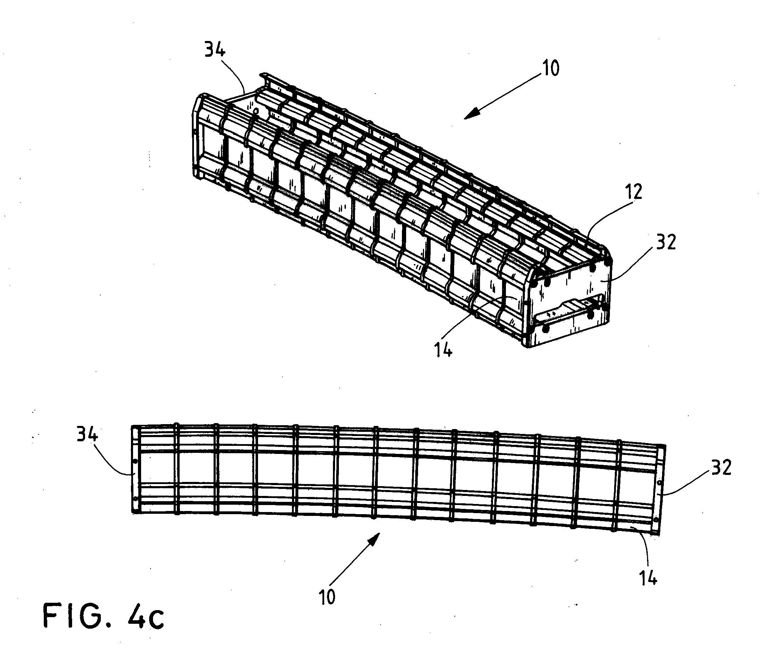

In den Fig. 4a, 4b und 4c dargestellten schematischen Ausführungsbeispielen sind jeweils im oberen Bereich perspektivische Ansichten der Führungseinrichtungen 10 dargestellt. Die unteren Darstellungen in den Fig. 4a, 4b, 4c zeigen schematisch Seitenansichten der jeweiligen oberhalb dargestellten Führungseinrichtung 10.

Bei dem in Fig. 4b dargestellten Ausführungsbeispiel der Führungseinrichtung 10 ist diese geradlinig ausgebildet. Bei dem in Fig. 4a gezeigten Ausführungsbeispiel ist die Führungseinrichtung 10 nach oben gebogen, so dass die Abschlussplatte 32 mit einem (vertikalen) Höhenversatz gegenüber der Abschlussplatte 34 angeordnet ist. Bei dem in Fig. 4c dargestellten Ausführungsbeispiel ist die Führungseinrichtung 10 nach unten gebogen, so dass die Abschlussplatte 32 mit einem Höhenversatz nach unten gegenüber der Abschlussplatte 34 angeordnet ist.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 10: Führungseinrichtung
- 12: Führungsschiene
- 14: Führungsschiene
- 15: Transporttrumausnehmung
- 16: Führungsprofil Volltrum
- 17: Führungsprofil Leertrum
- 18: Führungsprofil Volltrum
- 19: Führungsprofil Leertrum
- 20: Leertrumausnehmung
- 22: Führungskörper
- 24: Abstandskörper
- 26: Querstrebe
- 28: Klemmstrebe
- 32: Abschlussplatte
- 34: Abschlussplatte
- 35: Schraubmutter
- 36: Zugstrebe, Spannelement
- 37: Spannschraube
- 38: Zugstrebe, Spannelement
- 39: Fixierungslasche
- S: Schnittebene

## Patentansprüche

1. Führungseinrichtung (10) für ein Fördermittel, insbesondere Förderkette, einer Förderanlage der Tabak verarbeitenden Industrie, wobei das Fördermittel seitlich an seinen Längsseiten zwischen zwei Führungsschienen (12, 14) in Förderrichtung angeordnet oder führbar ist, wobei wenigstens eine seitliche Führungsschiene (12, 14) in einem Abschnitt mehrere nicht-elastische Führungskörper (22) und wenigstens einen elastischen Abstandskörper (24) aufweist, wobei der wenigstens eine elastische Abstandskörper (24) in Förderrichtung des Fördermittels zwischen zwei nicht-elastischen Führungskörpern (22) angeordnet oder anordbar ist und wobei die Anordnung aus zwei nicht-elastischen Führungskörpern (22) mit einem dazwischen angeordneten oder anordbaren elastischen Abstandskörpern (24) von wenigstens einem Spannelement (36, 38) durchsetzt oder durchsetzbar ist, so dass die Anordnung aus den nicht-elastischen Führungskörpern (22) und elastischen Abstandskörpern (24) verspannt ist oder verspannbar ist.

2. Führungseinrichtung (10) nach Anspruch 1, **dadurch gekennzeichnet, dass** für die beiden Seiten des Fördermittels jeweils eine seitliche Führungsschiene (12, 14) in einem Förderabschnitt jeweils aus mehreren nicht-elastischen Führungskörpern (22) und zwischen jeweils zwei nicht-elastischen Führungskörpern (22) angeordneten oder anordbaren elastischen Abstandkörpern (24) vorgesehen ist.

3. Führungseinrichtung (10) nach Anspruch 2, **dadurch gekennzeichnet, dass** für die beiden Seiten des Fördermittels die seitlichen Führungsschienen (12, 14) jeweils von wenigstens einem, insbesondere von mehreren, vorzugsweise zwei, Spannelementen (36, 38) durchsetzbar oder durchsetzt sind, wobei insbesondere die Spannelemente (36, 38) in Längserstreckung der Führungsschienen (12, 14) angeordnet sind.

4. Führungseinrichtung (10) nach einem der Ansprüche 1 bis 3, **dadurch gekennzeichnet, dass** die nicht-elastischen Führungskörper (22) dicker als die elastischen Abstandskörper (24) sind.

5. Führungseinrichtung (10) nach einem der Ansprüche 1 bis 4, **dadurch gekennzeichnet, dass** die beiden Führungsschienen (22, 24) in Förderrichtung des Fördermittels zwischen zwei Abschlussplatten (32, 34) angeordnet sind, wobei insbesondere die Abschlussplatten (32, 34) und die nicht-elastischen Führungskörper (22) und die elastischen Abstandskörper (24) von den Spannelementen (34) durchsetzt oder durchsetzbar sind.

6. Führungseinrichtung nach Anspruch 5, **dadurch gekennzeichnet, dass** die Abschlussplatten (32, 34) jeweils einen Ausschnitt (20) zum Durchtritt des Leertrums des Fördermittels und/oder jeweils einen Ausschnitt (15) zum Durchtritt des Volltrums des Fördermittels aufweisen.

7. Führungseinrichtung (10) nach einem der Ansprüche 1 bis 6, **dadurch gekennzeichnet, dass** in Förderrichtung des Fördermittels mehrere Führungskörper (22) einer Führungsschiene (12, 14) unter Verwendung von Verbindungsmitteln (39), insbesondere einer oder mehrerer Laschen (39) oder dergleichen, verbindbar oder verbunden sind.

8. Führungseinrichtung (10) nach einem der Ansprüche 1 bis 7, **dadurch gekennzeichnet, dass** quer zur Förderrichtung des Fördermittels wenigstens eine Verstrebung (26) zwischen den Führungsschienen (12, 14) angeordnet ist, wobei unter Verwendung der Verstrebung (26) zwei Führungskörper (22) von jeweils einer Führungsschiene (12, 14) miteinander verbindbar sind.

9. Führungseinrichtung (10) nach einem der Ansprüche 1 bis 8, **dadurch gekennzeichnet, dass** die Führungskörper (22) der Führungsschienen (12, 14) jeweils mindestens eine, vorzugsweise U-förmige oder nutförmige, Aufnahme (16, 18) zur Führung des Volltrums des Fördermittels aufweisen.

10. Führungseinrichtung (10) nach einem der Ansprüche 1 bis 9, **dadurch gekennzeichnet, dass** die Führungskörper (22) der Führungsschienen (12, 14) jeweils mindestens eine, vorzugsweise U-förmige oder nutförmige, Aufnahme (17, 19) zur Führung des Leertrums des Fördermittels aufweisen.

11. Führungseinrichtung (10) nach einem der Ansprüche 1 bis 10, **dadurch gekennzeichnet, dass** die Führungsschienen (12, 14) durch Spannen der Spannelemente (34, 36) in eine nicht-gerade, insbesondere gebogene, Form bringbar sind.

12. Förderanlage der Tabak verarbeitenden Industrie mit einem Fördermittel, vorzugsweise einer Tragförderkette, für die Förderung eines Artikelmassenstroms aus stabförmigen Artikeln der Tabak verarbeitenden Industrie, wobei die stabförmigen Artikel mittels des Fördermittels förderbar sind, und mit einer Führungseinrichtung (10) für das Fördermittel nach einem der Ansprüche 1 bis 11.
